# EUROPEAN PATENT APPLICATION

(11) **EP 4 585 636 A1**
(43) Date of publication of application: **16.07.2025**
(21) Application number: 23863131.1
(22) Date of filing: 04.09.2023
(51) Int. Cl.: C08G 75/02, C08L 63/00

(54) **THIOL GROUP-CONTAINING POLYETHER POLYMER, EPOXY RESIN-CONTAINING COMPOSITION, AND CURING AGENT FOR EPOXY RESIN**

(30) Priority: 06.09.2022 JP 2022141146
(71) Applicant: Toray Fine Chemicals Co., Ltd., Tokyo 101-0041 (JP)
(72) Inventor: ABE, Hiromitsu, Ichihara-shi, Chiba 299-0196 (JP); SEO, Motoharu, Ichihara-shi, Chiba 299-0196 (JP); NISHIMURA, Tomoaki, Ichihara-shi, Chiba 299-0196 (JP)
(74) Representative: Mewburn Ellis LLP
(86) International application number: PCT/JP2023/032188
(87) International publication number: WO 2024/053593

(57) **Abstract**

An object of the present invention is to provide a thiol group-containing polyether polymer which has a lower viscosity than that of an epoxy adhesive in which a conventional polymercaptan curing agent is used, is excellent in workability, and can maintain the low viscosity of an epoxy adhesive even when the amount of the additive is increased. The present invention is a thiol group-containing polyether polymer, including: a polyether moiety represented by general formula (1) below and a structural unit represented by general formula (2) below in a main chain; and a structural unit represented by general formula (3) below at a terminal, wherein a ratio [-SH]/[-Sₓ-] of a peak area corresponding to a structural unit of - SH to a peak area corresponding to a structural unit of - Sₓ- in structural analysis by ¹³CNMR measurement is 7.0 or more. 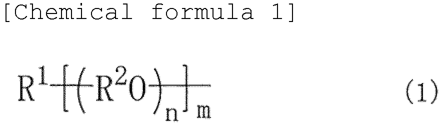 In the formula (1), R¹ is a residue obtained by removing a hydrogen atom from a polyamine or polyhydric alcohol having 10 or less carbon atoms, R² is an alkylene group having 2 to 6 carbon atoms, n is an integer of 1 to 200, and m is an integer of 2 to 8. 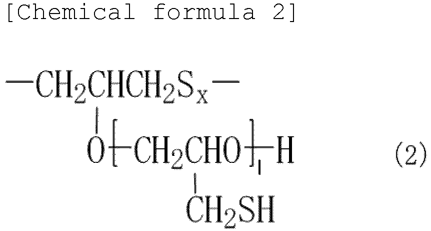 In the formula (2), Sₓ represents one or two or more consecutive sulfur atoms, x is an integer of 1 to 5, and l is an integer of 0 to 10. 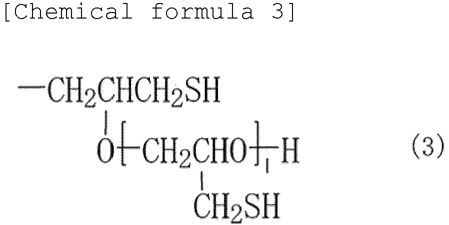 In the formula (3), l is an integer of 0 to 10.

## Description

### TECHNICAL FIELD

The present invention relates to a thiol group-containing polyether polymer, an epoxy resin-containing composition, and a curing agent for an epoxy resin.

### BACKGROUND ART

Cured products containing an epoxy resin have good adhesiveness, chemical resistance, a low shrinkage rate, and excellent physical properties and have been widely used conventionally as a coating material, an adhesive and the like.

Among them, epoxy adhesives have good adhesiveness and chemical resistance. As a curing agent for an epoxy adhesive, a polythiol compound is used when fast curability and high adhesive strength are required. As a curing agent of an epoxy adhesive, a polythiol compound cures the epoxy adhesive faster than other epoxy curing agents.

Many terminal-thiol-group-containing compounds having no polysulfide skeleton in the main chain have been reported as compounds capable of causing a thiol group and an epoxy group to rapidly react (see, for example, Patent Document 1).

Among them, as an economical and safe curing agent for an epoxy resin, a compound having a polyether skeleton in the main chain and having three or more thiol groups in one molecule is widely commercially available. Examples of the compound having a polyether skeleton in the main chain and having three or more thiol groups in one molecule include "POLYTHIOL QE-340M" manufactured by Toray Fine Chemicals Co., Ltd. and "GPM-800" manufactured by Huntsman International LLC. Generally, such a polymercaptan curing agent is used in a state of being mixed with an epoxy resin and a tertiary amine as a curing accelerator.

Into an epoxy adhesive in which a compound having a polyether skeleton in the main chain and having three or more thiol groups in one molecule is used as a polymercaptan curing agent, an additive is added in order to impart various performances such as heat resistance and chemical resistance. However, increasing the amount of additives in order to impart performances increases the viscosity of the adhesive and deteriorates workability.

Therefore, in order to improve the performance of epoxy adhesives in which a conventional polymercaptan curing agent is used, an adhesive capable of maintaining a conventional viscosity even when the amount of the additive is increased is required.

### PRIOR ART DOCUMENT

### PATENT DOCUMENT

Patent Document 1: Japanese Patent Laid-open Publication No. 8-269203

### SUMMARY OF THE INVENTION

### PROBLEMS TO BE SOLVED BY THE INVENTION

An object of the present invention is to provide a thiol group-containing polyether polymer which has a lower viscosity than an epoxy adhesive in which a conventional polymercaptan curing agent is used, is excellent in workability, and can maintain the low viscosity of an epoxy adhesive even when the amount of the additive is increased.

### SOLUTIONS TO THE PROBLEMS

The present inventors have focused on the amount of the -Sₓ- bond contributing to the thickening of the polymercaptan compound as a polymercaptan curing agent capable of improving the workability of the adhesive and maintaining the viscosity and workability equivalent to conventional ones even when the amount of the additive is increased, and as a result of intensive studies, have arrived at the present invention.

The present invention is a thiol group-containing polyether polymer, including: a polyether moiety represented by general formula (1) below and a structural unit represented by general formula (2) below in a main chain; and a structural unit represented by general formula (3) below at a terminal, wherein a ratio [-SH]/[-Sₓ-] of a peak area corresponding to a structural unit of -SH to a peak area corresponding to a structural unit of -Sₓ- in structural analysis by ¹³CNMR measurement is 7.0 or more.

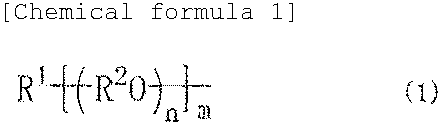

In the formula (1), R¹ is a residue obtained by removing a hydrogen atom from a polyamine or polyhydric alcohol having 10 or less carbon atoms, R² is an alkylene group having 2 to 6 carbon atoms, n is an integer of 1 to 200, and m is an integer of 2 to 8.

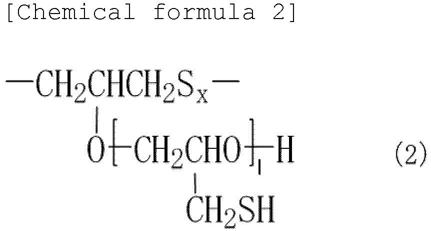

In the formula (2), Sₓ represents one or two or more consecutive sulfur atoms, x is an integer of 1 to 5, and l is an integer of 0 to 10.

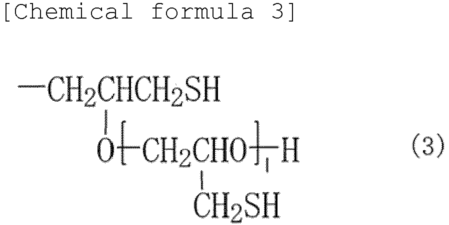

In the formula (3), l is an integer of 0 to 10.

The present invention is also an epoxy resin-containing composition, including: 100 to 600 parts by mass of an epoxy resin relative to 100 parts by mass of the thiol-containing polyether polymer of the present invention.

The present invention is also a curing agent for an epoxy resin, including the thiol group-containing polyether polymer of the present invention.

### EFFECTS OF THE INVENTION

According to the thiol group-containing polyether polymer of the present invention, there can be provided an epoxy adhesive which, when the thiol group-containing polyether polymer is used as a curing agent for an epoxy resin, has a lower viscosity than one in which a conventional polymercaptan curing agent is used, is excellent in workability, and can maintain the low viscosity even when the amount of the additive is increased.

### EMBODIMENTS OF THE INVENTION

The thiol group-containing polyether polymer of the present invention will be described in detail.

The thiol group-containing polyether polymer of the present invention includes a polyether moiety represented by general formula (1) below in a main chain.

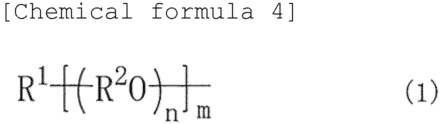

In the formula (1), R¹ is a residue obtained by removing m hydrogen atoms from a polyamine or polyhydric alcohol having 10 or less carbon atoms. Examples of the polyamine or polyhydric alcohol include glycerin, trimethylolpropane, trimethylolethane, hexanetriol, diglycerin, pentaerythritol, triethanolamine, ethylenediamine, and sucrose. These polyamines and polyhydric alcohols can be used alone or in combination. Among the polyhydric alcohols, glycerin, trimethylolpropane, and trimethylolethane are particularly preferable.

In the formula (1), R² is an alkylene group having 2 to 6 carbon atoms, preferably 2 to 4 carbon atoms. Examples of the alkylene group include ethylene, n-propylene, isopropylene, n-butylene, isobutylene, pentylene, and hexylene.

In the formula (1), n is an integer of 1 to 200, preferably 1 to 100.

In the formula (1), m is an integer of 2 to 8, preferably 2 to 5.

The thiol group-containing polyether polymer of the present invention includes a structural unit represented by the general formula (2) below in a main chain.

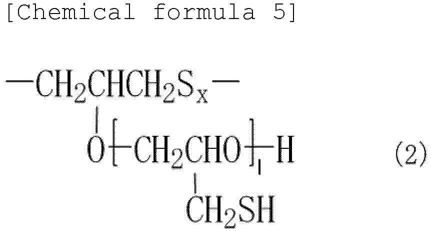

In the formula (2), Sₓ represents one or two or more consecutive sulfur atoms, x is an integer of 1 to 5, and l is an integer of 0 to 10.

The thiol group-containing polyether polymer of the present invention includes a structural unit represented by the general formula (3) below at a terminal.

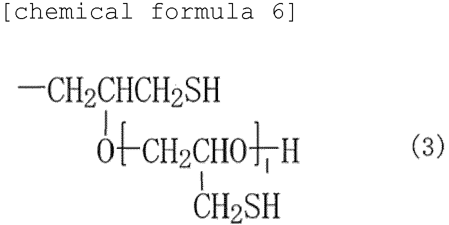

In the formula (3), l is an integer of 0 to 10.

The thiol group-containing polyether polymer of the present invention can be obtained by reacting a halogen-terminated polyether polymer with a hydrogen sulfide metal salt.

The halogen-terminated polyether polymer has a polyether moiety represented by the general formula (1) and a structure represented by the general formula (4) below at a terminal in a main chain.

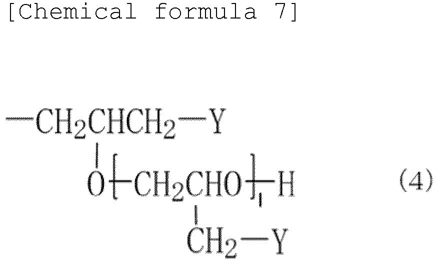

In the formula (4), Y is a halogen atom, and l is an integer of 0 to 10.

The polyol is represented by the general formula (5) below.

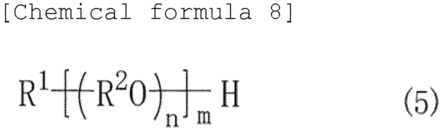

Details of R¹, R², n, and m in the formula (5) are the same as those in the formula (1).

The halogen-terminated polyether polymer is obtained by adding epihalohydrin to a hydroxyl group of a polyol having a polyether moiety in a main chain and having two or more hydroxyl groups at a terminal.

Examples of the polyol include a polyamine or polyhydric alcohol to which ethylene oxide, propylene oxide, tetrahydrofuran or the like is added. Examples of the polyamine or polyhydric alcohol include glycerin, trimethylolpropane, trimethylolethane, hexanetriol, triethanolamine, diglycerin, pentaerythritol, ethylenediamine, and sucrose. These polyamines and polyhydric alcohols can be used alone or in combination. Among the polyols, polypropylene glycol obtained by adding propylene oxide to glycerin, trimethylolpropane, or trimethylolethane is particularly preferable.

The polyol preferably has a molecular weight of 200 to 10,000, more preferably 200 to 3,000.

The epihalohydrin is preferably epibromohydrin or epichlorohydrin, more preferably epichlorohydrin.

The amount of the epihalohydrin used is preferably 1.0 mol times or more and 1.5 mol times or less the hydroxyl group of the polyol. When the amount used is 1.0 mol times or more, the hydroxyl group of the polyol can be prevented from remaining. When the amount used is 1.5 mol times or less, more preferably 1.30 mol times or less, epihalohydrin can be prevented from remaining.

By reacting the hydrogen sulfide metal salt, the structures represented by the general formulas (2) and (3) of the thiol group-containing polyether polymer are produced from the structure represented by the general formula (4) of the halogen-terminated polyether polymer.

Examples of the hydrogen sulfide metal salt include potassium hydrogen sulfide, sodium hydrogen sulfide, lithium hydrogen sulfide, cesium hydrogen sulfide, and rubidium hydrogen sulfide. Among them, sodium hydrogen sulfide is preferable as the hydrogen sulfide metal salt.

The amount of the hydrogen sulfide metal salt used is preferably 1.0 to 5.0 mol times, more preferably 1.1 to 1.5 mol times the molar amount of the halogen in the halogen-terminated polyether polymer. By setting the amount of the hydrogen sulfide metal salt used within the above range, the content of the halogen in the thiol group-containing polyether polymer can be reduced within the following required range.

In electronic material applications, components of products, parts, and materials are required not to contain a halogen or a halogen compound, the thresholds for halogen-free are defined by International Electrotechnical Commission (IEC) 61249-2-21, Institute for Printed Circuits (IPC) 4101B, and Japan Electronics Packaging and Circuits Association (JPCA) in Japan as international standards, and the chlorine (Cl) content is required to be 0.09% by mass (900 ppm) or less.

The hydrogen sulfide metal salt can also be used in an aqueous solution, and the concentration of the hydrogen sulfide metal salt in the aqueous solution is preferably 25% by mass or more, more preferably 32% by mass or more, further preferably 40% by mass or more. The concentration is preferably 70% by mass or less.

A solvent can be used when reacting the hydrogen sulfide metal salt with the halogen-terminated polyether polymer. Examples of the solvent include alcohols such as methanol, ethanol, propanol, and butanol, ketones such as methyl ethyl ketone and methyl isobutyl ketone, esters such as ethyl acetate and butyl acetate, sulfoxides such as dimethyl sulfoxide, nitriles such as acetonitrile, amines such as pyridine, amides such as N,N-dimethylformamide, N,N-dimethylacetamide, and N-methylpyrrolidone, and water. Among them, N,N-dimethylformamide, N,N-dimethylacetamide, N-methylpyrrolidone, and water are particularly preferable.

The amount of the solvent used is preferably 0.2 mass times to 5.0 mass times, more preferably 1.0 mass times to 3.0 mass times the mass of the halogen-terminated polyether polymer.

A catalyst can be used when reacting the hydrogen sulfide metal salt with the halogen-terminated polyether polymer. When a catalyst is used, the reaction rate can be improved, and the reaction can be completed quickly. Examples of the catalyst include phase transfer catalysts such as tetrabutylammonium chloride (TBAC), tetrabutylammonium bromide (TBAB), tetrabutylammonium hydrogen sulfate (TBAHS), tributylmethylammonium chloride (MTBAC), benzyltrimethylammonium chloride (BTMAC), benzyltriethylammonium chloride (BTEAC), methyltrioctylammonium chloride (MTOAC), and tetrabutylphosphonium bromide (TBPB). Among them, TBAB and MTBAC are preferable.

The amount of the catalyst used is preferably 0.005 to 0.2 mol times, more preferably 0.01 to 0.1 mol times the molar amount of the halogen of the terminal halogenated polyether polymer.

Examples of the atmosphere in the reaction system when reacting the hydrogen sulfide metal salt with the halogen-terminated polyether polymer include air, inert gases such as nitrogen and helium, and hydrogen sulfide. Among them, hydrogen sulfide, which has an effect of lowering the viscosity of the thiol group-containing polyether polymer to be obtained, is preferable.

As a method for introducing hydrogen sulfide, hydrogen sulfide produced as a by-product can be confined and used using an airtight container, or hydrogen sulfide can be introduced from the outside of the system using a hydrogen sulfide cylinder or the like.

A hydrogen sulfide atmosphere can be produced by a neutralization reaction between an acid and the hydrogen sulfide metal salt. Examples of the acid used at that time include organic carboxylic acids such as formic acid, acetic acid, propionic acid, butyric acid, oxalic acid, citric acid, and lactic acid, organic sulfonic acids such as methanesulfonic acid and p-toluenesulfonic acid, and inorganic acids such as hydrochloric acid, sulfuric acid, nitric acid, and phosphoric acid. The amount of the acid used can be set depending on the internal pressure of the airtight container.

The gauge pressure in the airtight container is preferably 0 to 5.0 MPa, more preferably 0.1 to 3.0 MPa, further preferably 0.1 to 2.0 MPa. By setting the gauge pressure during the reaction within the above range, an increase in the -Sₓ- bond can be suppressed, and the viscosity can be lowered.

The reaction temperature when reacting the hydrogen sulfide metal salt with the halogen-terminated polyether polymer is preferably 40 to 130°C, more preferably 60 to 100°C. By setting the reaction temperature within the above range, the content of the halogen in the thiol group-containing polyether polymer to be produced can be reduced, and the halogen-terminated polyether polymer can have a viscosity that allows easy handling.

The reaction time when reacting the hydrogen sulfide metal salt with the halogen-terminated polyether polymer is preferably 1 to 20 hours, more preferably 3 to 9 hours. By setting the reaction time within the above range, the content of the halogen in the thiol group-containing polyether polymer to be produced can be reduced, and efficient productivity can be secured.

In the thiol group-containing polyether polymer of the present invention, the content of chlorine as a halogen is preferably 900 ppm or less. When the content of chlorine is 900 ppm or less, more preferably 600 ppm or less, further preferably 300 ppm or less, the thiol group-containing polyether polymer can be suitably used for electronic material applications.

The thiol group-containing polyether polymer of the present invention preferably includes 10% by mass to 18% by mass of a thiol group. When the content of the thiol group is 10% by mass or more, more preferably 12% by mass or more, the curing rate can be increased when the thiol group-containing polyether polymer is used as a curing agent of an epoxy adhesive. When the content of the thiol group is 18% by mass or less, more preferably 17% by mass or less, further preferably 16% by mass or less, the -Sₓ-bond can be suppressed to a small number, and an increase in viscosity can be suppressed.

It is important that in the thiol group-containing polyether polymer of the present invention, a ratio [-SH]/[-Sₓ-] of a peak area corresponding to a structural unit of -SH to a peak area corresponding to a structural unit of -Sₓ- in the structural analysis by ¹³CNMR measurement be 7.0 or more. When [-SH]/[-Sₓ-] is 7.0 or more, more preferably 8.0 or more, an increase in viscosity can be suppressed. The -Sx- bond of the polymercaptan compound indicates a high-molecular-weight compound produced by a side reaction, and affects an increase in viscosity. That is, it is presumed that when the -Sx- bond of the polymercaptan compound is large, the viscosity is high, and when the -Sx- bond is small, the viscosity is low, and therefore it is presumed that the thiol group-containing polyether polymer of the present invention makes it possible to improve the workability and increase the amount of additives of a curing agent.

[-SH]/[-Sₓ-] is preferably 50.0 or less, more preferably 40.0 or less.

From the viewpoint of workability during the production of an adhesive and workability as an adhesive, the thiol group-containing polyether polymer of the present invention has a viscosity at 25°C of preferably 0.1 to 10 Pa·s, more preferably 0.5 to 8 Pa·s, further preferably 1 to 7 Pa·s.

From the viewpoint of workability during the production of an adhesive in a cold district and workability as an adhesive, the thiol group-containing polyether polymer of the present invention has a viscosity at 5°C of preferably 1 to 70 Pa · s, more preferably 1 to 60 Pa · s, further preferably 1 to 50 Pa · s.

The thiol group-containing polyether polymer of the present invention is preferably used as a curing agent for an epoxy resin. The thiol group-containing polyether polymer of the present invention can reduce the viscosity without impairing the curing properties of the epoxy resin-containing composition. Regarding the thiol group-containing polyether polymer of the present invention, in a curing agent in which the thiol group-containing polyether polymer of the present invention is used, the amount of additives for imparting heat resistance and chemical resistance, such as barium sulfate, calcium carbonate, and silica flour can be increased. That is, the curing agent for an epoxy resin of the present invention includes the thiol group-containing polyether polymer of the present invention.

The epoxy resin-containing composition of the present invention includes the thiol group-containing polyether polymer of the present invention and an epoxy resin.

Examples of the epoxy resin include an epoxy resin obtained by adding epichlorohydrin to a polyhydric phenol such as bisphenol A, bisphenol F, resorcinol, hydroquinone, pyrocatechol, 4,4-dihydroxybiphenyl, or 1,5-hydroxynaphthalene, an epoxy resin obtained by adding epichlorohydrin to a polyhydric alcohol such as ethylene glycol, propylene glycol, or glycerin, an epoxy resin obtained by adding epichlorohydrin to an aromatic dicarboxylic acid such as oxybenzoic acid or phthalic acid, and a polysulfide polymer having an epoxy group at a terminal (trade names "FLEP-50" and "FLEP-60", both manufactured by Toray Fine Chemicals Co., Ltd.), and those which are liquid at normal temperature are preferable.

In the epoxy resin-containing composition of the present invention, the content of the epoxy resin is preferably 100 to 600 parts by mass, more preferably 100 to 400 parts by mass, further preferably 100 to 200 parts by mass relative to 100 parts by mass of the thiol group-containing polyether polymer.

In the epoxy resin-containing composition of the present invention, the thiol group-containing polyether polymer can be dissolved in a solvent. By doing so, the application properties of the epoxy resin-containing composition can be effectively improved. As the solvent, an alcohol solvent is preferably used. From the viewpoint that the epoxy resin-containing composition can be distilled off by slight heating after being applied to a substrate or the like, an alcohol having a low boiling point is preferable. In particular, methanol, ethanol, isopropanol, n-butanol, t-butanol, n-heptanol, n-hexanol and the like are preferable because they are excellent in compatibility with the thiol group-containing polyether polymer. Among them, methanol and ethanol, which have low molecular weights, are more preferable.

The epoxy resin-containing composition of the present invention preferably includes an amine.

The blending amount of the amines is preferably 1 to 100 parts by mass, more preferably 1 to 60 parts by mass relative to 100 parts by mass of the epoxy resin. The content of the amine affects the pot life, and the amount used can be set depending on the design of the pot life.

Examples of the amine include aliphatic diamines such as ethylenediamine, diethylenetriamine, triethylenetetramine, pentaethylenehexamine, trimethylenediamine, hexamethylenediamine, and tetramethylenediamine, aliphatic tertiary amines such as N,N-dimethylpropylamine and N,N,N',N'-tetramethylhexamethylenediamine, alicyclic tertiary amines such as N-methylpiperidine and N,N'-dimethylpiperazine, aromatic tertiary amines such as benzyldimethylamine, dimethylaminomethylphenol, and 2,4,6-tris(dimethylaminomethyl)phenol ("ANCAMINE"K-54, manufactured by Evonik Industries, EHC-30 manufactured by ADEKA CORPORATION), polyamine epoxy resin adducts produced by reacting an epoxy resin with an excess of amine, polyamine-ethylene oxide adducts, polyamine-propylene oxide adducts, cyanoethylated polyamines, diamines whose main chain is silicon, dehydration condensates obtained by reacting polyamines with phenols, aldehydes and the like, imidazoles such as 2-ethyl-4-methylimidazole, and modified polyamines.

The epoxy resin-containing composition of the present invention preferably has a pot life of 2 to 10 minutes when cured at 23°C and 50%RH. The pot life is measured according to Determination of the pot life of multi-component adhesives (Method 1) of JIS K6870. A thiol compound and an amine compound are mixed in a predetermined ratio with 10 g of an epoxy resin under conditions of 23°C and 50%RH to obtain an epoxy resin-containing composition. In the present invention, the point in time at which these three components are mixed is referred to as a starting point in time of curing. A toothpick is put into the epoxy resin-containing composition, and the time from the starting point in time of curing to the point in time when the toothpick does not move even when touched by a finger is defined as a pot life.

When the epoxy resin-containing composition of the present invention is applied so as to have a thickness of 6.0 mm or more and cured at 23°C and 50%RH, the epoxy resin-containing composition of the present invention preferably has a shore D hardness according to JIS K7215 of 60 or more and a lap shear strength according to JIS K6850 of 12 MPa or more after 24 hours from the starting point in time of curing.

### EXAMPLES

The present invention will be specifically described by means of Example and Comparative Examples below. In the following Example, a general reagent purchased from a reagent manufacturer was used as a raw material unless otherwise specified. The following apparatus and method were used for the analysis.

### [Measurement method]

### (1) [-SH]/[-Sₓ-]

Structural analysis was performed by ¹³CNMR measurement using a nuclear magnetic resonance apparatus (ECZ-600R manufactured by JEOL RESONANCE), and the ratio of the peak area by the structural unit of [-SH] to the peak area by the structural unit of [-Sₓ-] was calculated.

### (2) Viscosity

The viscosities of a sample at 25°C and 5°C were measured using a viscometer (U-EII manufactured by Toki Sangyo Co., Ltd.).

### (3) Content of thiol group

A weighed sample was dissolved in a mixed solution of toluene and pyridine, an aqueous potassium iodide solution was added thereto, and then the resulting solution was titrated with an iodine standard solution to measure the content of thiol groups.

### (4) Content of chlorine

The content of chlorine contained in the thiol group-containing polyether polymer was measured using an elemental analyzer (NSX-2100 manufactured by Mitsubishi Chemical Analytech Co., Ltd.).

### (5) Pot life

The pot life of the epoxy resin-containing composition was measured according to Determination of the pot life of multi-component adhesives (Method 1) of JIS K6870. In the present invention, 10 g of a bisphenol A-type epoxy resin ("jER" 828 manufactured by Mitsubishi Chemical Group Corporation, epoxy equivalent: 184 to 194) as an epoxy resin, 8.0 g of each thiol group-containing polyether polymer of Example and Comparative Examples, and 1 g of an amine compound (EHC-30 manufactured by ADEKA CORPORATION) were mixed under conditions of 23°C and 50%RH, a toothpick was put into the epoxy resin-containing composition, a mixture, and the point at which the toothpick did not move even when touched by a finger was measured as the pot life. The pot life was measured from the starting point in time of curing, and the state of the toothpick was checked every 15 seconds to determine the pot life in minutes.

### (6) Hardness

The hardness of the epoxy resin-containing composition was measured by a method specified in JIS K7215. Specifically, the epoxy resin-containing composition was poured into containers having an inner diameter of 31 mm and a depth of 8 mm in a room at a temperature of 23°C and a humidity of 50%RH, and after 24 hours from the starting point in time of curing of the epoxy resin-containing composition, a sample for measurement having a diameter of 31 × a thickness of 8 mm was obtained. The hardness of the flat surface of the sample was measured using a type D durometer. The measurement was performed three times, and the average value was taken as the numerical value of the hardness.

### (7) Lap shear strength

The lap shear strength of the epoxy resin-containing composition was measured according to the method specified in JIS K6850. The specific measurement method is shown below.
Adherend: The surface of a 100 mm × 25 mm × 3 mm soft steel plate (sandblasted) was degreased using acetone and then methyl ethyl ketone to perform a surface treatment.
Test piece: A test piece having dimensions specified in JIS K6850 was produced in a room at a temperature of 23°C and a humidity of 50%RH. Specifically, the epoxy resin-containing composition was applied to one of two adherends, the adherend was bonded to the other adherend so as to have a lap length of 12.5 mm and a thickness of an adhesive layer of about 0.2 mm, the epoxy resin-containing composition was cured at a temperature of 23°C and a humidity of 50%RH, and the lap shear strength was measured after 24 hours from the starting point in time of curing of the epoxy resin-containing composition.
Measurement method: The lap shear strength was measured at a tensile speed of 2.0 mm/min in a room at a temperature of 23°C and a humidity of 50%RH using a tensile tester specified in JIS K 6850. For the measurement, three test pieces were used, and the average value was taken as the numerical value of the lap shear strength.

### [Example 1]

### (Thiol group-containing polyether polymer)

In a 1 L reaction vessel, 250 g of a trifunctional polypropylene glycol (OH value: 510 mg KOH/polypropylene glycol) obtained by adding propylene oxide to glycerin and 1.5 g of stannic chloride pentahydrate were charged, the temperature was raised to 50°C, 248 g of epichlorohydrin (1.18 mol times the OH group of the trifunctional polypropylene glycol) was added dropwise over 1 hour, and the mixture was then stirred at 80°C for 2 hours to obtain a halogen-terminated polyether polymer.

Then, the halogen-terminated polyether polymer was transferred to an airtight container, 15 g of citric acid was added, and the airtight container was sealed. To the sealed container, 365 g of an aqueous sodium hydrogen sulfide solution (concentration: 48%) was added dropwise, and the mixture was stirred at 90°C for 5 hours. Then, the inorganic salt and water were removed to obtain a colorless and transparent liquid thiol group-containing polyether polymer.

The [-SH]/[-Sₓ-] of the thiol group-containing polyether polymer was 9.6. The content of the thiol group was 15% by mass, the viscosity at 25°C was 4 Pa·s, the viscosity at 5°C was 40 Pa·s, and the content of chlorine was 0.08% by mass.

### (Epoxy resin-containing composition)

10.0 g of a bisphenol A-type epoxy resin ("jER" 828 manufactured by Mitsubishi Chemical Group Corporation, epoxy equivalent: 184 to 194) as an epoxy resin, 8.0 g of the thiol group-containing polyether polymer as a thiol compound, and 1 g of an amine compound (EHC-30 manufactured by ADEKA CORPORATION) were mixed with a spatula under conditions of 23°C and 50%RH for 60 seconds to obtain an epoxy resin-containing composition.

The pot life of the epoxy resin-containing composition was 3.0 minutes. The shore D hardness after 24 hours from the starting point in time of curing was 83, which was a sufficient hardness as an adhesive. The lap shear strength after 24 hours from the starting point in time of curing was 14 MPa, which was a sufficiently high numerical value as an adhesive. The results are shown in Table 1.

### [Comparative Example 1]

### (Thiol group-containing polyether polymer)

A commercially available thiol group-containing polyether polymer (QE-340M manufactured by Toray Fine Chemicals Co., Ltd.) was used.

The [-SH]/[-Sₓ-] of the thiol group-containing polyether polymer was 5.3. The content of the thiol group was 13% by mass, the viscosity at 25°C was 14 Pa·s, the viscosity at 5°C was 160 Pa·s, and the content of chlorine was 0.2% by mass.

### (Epoxy resin-containing composition)

An epoxy resin-containing composition was obtained in the same manner as in Example 1 except that the thiol group-containing polyether polymer was used as a thiol compound.

The evaluation results are shown in Table 1.

### [Comparative Example 2]

### (Thiol group-containing polyether polymer)

A commercially available thiol group-containing polyether polymer (GPM-800 manufactured by Huntsman International LLC) was used.

The [-SH]/[-Sₓ-] of the thiol group-containing polyether polymer was 6.4. The content of the thiol group was 12% by mass, the viscosity at 25°C was 11 Pa·s, the viscosity at 5°C was 99 Pa·s, and the content of chlorine was 0.03% by mass.

### (Epoxy resin-containing composition)

An epoxy resin-containing composition was obtained in the same manner as in Example 1 except that the thiol group-containing polyether polymer was used as a thiol compound.

The evaluation results are shown in Table 1.

**[Table 1]**

| | | | Example 1 | Comparative Example 1 QE | Comparative Example 2 GPM-800 |
|---|---|---|---|---|---|
| Thiol group-containing polyether polymer | [-SH]/[-Sₓ-] | | 9. 6 | 5.3 | 6.4 |
| | Content of thiol group (% by mass) | | 15 | 13 | 12 |
| | Viscosity at 25°C (Pa·s) | | 4 | 14 | 11 |
| | Viscosity at 5°C (Pa·s) | | 40 | 160 | 99 |
| Adhesive | Epoxy resin composition (parts by mass) | | 100 | 100 | 100 |
| | Thiol group-containing polyether polymer | (parts by mass) | 80 | 80 | 80 |
| | Amine compound (parts by mass) | | 10 | 10 | 10 |
| | Pot life (min) | | 3.0 | 5.0 | 3.5 |
| | Hardness (Shore D) | After 24 hours | 83 | 83 | 82 |
| | Lap shear strength (MPa) | After 24 hours | 14 | 14 | 12 |

As shown in Table 1, in the thiol group-containing polyether polymer of Example 1, the [-SH]/[-Sₓ-] is as high as 7.0 or more, the viscosity is low, and the workability is excellent. On the other hand, in the conventional thiol compounds according to Comparative Example 1 and Comparative Example 2, the [-SH]/[-Sₓ-]s are less than 7.0, and the viscosities are high.

## Claims

1. A thiol group-containing polyether polymer, comprising: a polyether moiety represented by general formula (1) below and a structural unit represented by general formula (2) below in a main chain; and a structural unit represented by general formula (3) below at a terminal, wherein a ratio [-SH]/[-Sₓ-] of a peak area corresponding to a structural unit of -SH to a peak area corresponding to a structural unit of -Sₓ- in structural analysis by ¹³CNMR measurement is 7.0 or more: 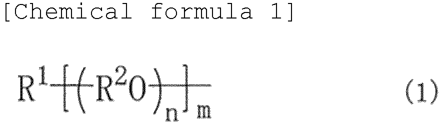 wherein R¹ is a residue obtained by removing a hydrogen atom from a polyamine or polyhydric alcohol having 10 or less carbon atoms, R² is an alkylene group having 2 to 6 carbon atoms, n is an integer of 1 to 200, and m is an integer of 2 to 8, 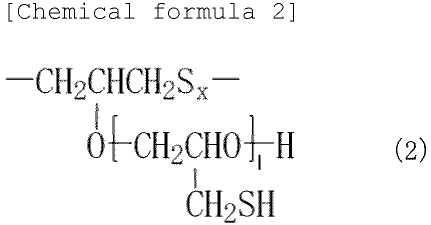 wherein Sₓ represents one or two or more consecutive sulfur atoms, x is an integer of 1 to 5, and l is an integer of 0 to 10, 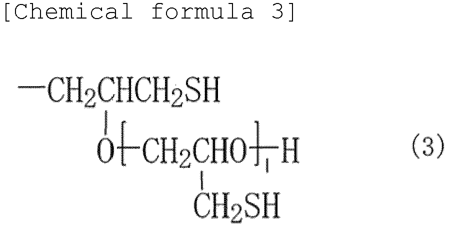 wherein l is an integer of 0 to 10.

2. The thiol group-containing polyether polymer according to claim 1, comprising 10% by mass to 18% by mass of a thiol group.

3. The thiol group-containing polyether polymer according to claim 1 or 2, having a viscosity at 25°C of 0.1 Pa · s to 10 Pa · s.

4. The thiol group-containing polyether polymer according to any one of claims 1 to 3, having a viscosity at 5°C of 1 Pa · s to 70 Pa · s.

5. An epoxy resin-containing composition, comprising: 100 to 600 parts by mass of an epoxy resin relative to 100 parts by mass of the thiol-containing polyether polymer according to any one of claims 1 to 4.

6. The epoxy resin-containing composition according to claim 5, comprising 1 to 60 parts by mass of an amine relative to 100 parts by mass of the epoxy resin.

7. The epoxy resin-containing composition according to claim 5 or 6, having a Shore D hardness according to JIS K7215 of 70 or more and a lap shear strength according to JIS K6850 of 12 MPa or more after 24 hours from a starting point in time of curing of the epoxy resin-containing composition.

8. A curing agent for an epoxy resin, comprising the thiol group-containing polyether polymer according to claims 1 to 4.
